# EUROPÄISCHE PATENTSCHRIFT

(11) **EP 2 831 466 B1**
(45) Veröffentlichungstag und Bekanntmachung des Hinweises auf die Patenterteilung: **06.05.2020**
(21) Anmeldenummer: 13711869.1
(22) Anmeldetag: 19.03.2013
(51) Int. Cl.: F16F 15/134, F16F 15/139

(54) **ZWEIMASSENSCHWUNGRAD**
DUAL-MASS FLYWHEEL
VOLANT D'INERTIE À DEUX MASSES

(30) Priorität: 26.03.2012 DE 102012204760
(43) Veröffentlichungstag der Anmeldung: 04.02.2015
(73) Patentinhaber: Schaeffler Technologies AG & Co. KG, 91074 Herzogenaurach (DE)
(72) Erfinder: JANZ, Thomas, 77815 Bühl (DE); MENDE, Hartmut, 77815 Bühl (DE); MÜLLER, Jens, 77815 Bühl (DE); PINNAU, Philippe, 67770 Stattmatten (FR)
(86) Internationale Anmeldenummer: PCT/EP2013/055610
(87) Internationale Veröffentlichungsnummer: WO 2013/143910

(56) Entgegenhaltungen:
- WO-A1-2008/046379
- DE-A1-102009 030 975
- DE-A1-102010 047 803
- DE-A1-102010 050 407
- DE-A1-102011 081 162
- DE-A1-102011 081 911
- DE-A1-102011 102 910

## Beschreibung

Die Erfindung betrifft ein Zweimassenschwungrad, mit dessen Hilfe Drehschwingungen einer Antriebswelle eines Kraftfahrzeugmotors gedämpft werden können.

Derartige Zweimassenschwungräder sind beispielsweise aus der DE 10 2011 102910 A1 bekannt.

Beispielsweise aus DE 10 2008 004 150 A1 ist ein Zweimassenschwungrad bekannt, bei dem zur Drehschwingungsdämpfung einer Kurbelwelle eines Kraftfahrzeugverbrennungsmotors eine Primärmasse über eine Bogenfeder mit einer relativ zur Primärmasse verdrehbaren Sekundärmasse gekoppelt ist. Die Bogenfeder ist in einem Bogenfederkanal angeordnet, wobei eine Kanalwand des Bogenfederkanals durch die Primärmasse ausgebildet ist. In den Bogenfederkanal ragt ein Flansch der Sekundärmasse hinein, der über einen Reibring an der Kanalwand abgestützt ist.

Es besteht ein ständiges Bedürfnis die Lebensdauer eines Zweimassenschwungrads zu erhöhen.

Es ist die Aufgabe der Erfindung Maßnahmen aufzuzeigen, die eine erhöhte Lebensdauer eines Zweimassenschwungrads ermöglichen.

Die Lösung der Aufgabe erfolgt erfindungsgemäß durch ein Zweimassenschwungrad mit den Merkmalen des Anspruchs 1. Bevorzugte Ausgestaltungen der Erfindung sind in den Unteransprüchen angegeben, die jeweils einzeln oder in Kombination einen Aspekt der Erfindung darstellen können.

Erfindungsgemäß ist ein Zweimassenschwungrad zur Drehschwingungsdämpfung zwischen einer Antriebswelle eines Kraftfahrzeugmotors und einer Getriebeeingangswelle eines Kraftfahrzeuggetriebes vorgesehen mit einer Primärmasse zum Einleiten eines Drehmoments, einer relativ zur Primärmasse verdrehbaren Sekundärmasse zum Ausleiten eines Drehmoments, einem mit der Primärmasse und der Sekundärmasse koppelbaren Energiespeicherelement, insbesondere Bogenfeder, wobei durch die Primärmasse und/oder die Sekundärmasse ein Aufnahmekanal ausgebildet ist, wobei der Aufnahmekanal eine Kanalwand und einen in den Aufnahmekanal hineinragenden Flansch aufweist, wobei der Flansch über einen Reibring relativ verdrehbar an der Kanalwand abgestützt ist, wobei eine Dichteinrichtung zur Abdichtung des Aufnahmekanals vorgesehen ist.

Der Aufnahmekanal weist insbesondere ein Schmiermittel, vorzugsweise Schmierfett, auf, um Reibungseffekte zwischen dem Energiespeicherelement und der Kanalwand und/oder dem Flansch durch Relativbewegungen zu reduzieren. Durch die Dichteinrichtung kann der insbesondere als Bogenfederkanal ausgestaltete Aufnahmekanal weitestgehend abgedichtet werden. Durch die Dichteinrichtung kann ein Eindringen von Staub und Feuchtigkeit in den Aufnahmekanal verhindert oder zumindest deutlich erschwert werden. Eine Verfestigung von Schmierfett und/oder ein Auswaschen von Schmierfett wird dadurch vermieden, so dass die Schmierwirkung über die Lebensdauer des Zweimassenschwungrads erhalten oder sogar verlängert werden kann. Eine Reibungserhöhung innerhalb des Aufnahmekanals kann durch die Dichteinrichtung vermieden werden. Hierbei wird die Erkenntnis ausgenutzt, dass der zwischen dem Flansch und der Kanalwand vorgesehene Reibring zwar ein Austreten von Schmierfett signifikant reduzieren kann, aber dennoch ein Eindringen von Staubpartikeln und Feuchtigkeit zulassen kann. Durch die zum Reibring zusätzliche Dichteinrichtung kann eine weitere Abdichtungsbarriere geschaffen werden, die im Zusammenwirken mit der verbliebenen Dichtwirkung des Reibrings Staub und Feuchtigkeit von dem Aufnahmekanal abhalten kann. Vorzugsweise kann zwischen der Dichteinrichtung und dem Reibring ein Zwischenvolumen vorgesehen werden, in das an der Dichteinrichtung vorbeigelangter Staub und Feuchtigkeit von dem Reibring beabstandet aufgenommen werden kann. Vorzugsweise kann dieser Staub und diese Feuchtigkeit, beispielsweise bei abgeschaltetem Kraftfahrzeugmotor, an der Dichteinrichtung vorbei aus dem Zwischenvolumen heraus kriechen.

Die Kanalwand kann insbesondere von der Primärmasse ausgebildet werden. Die Kanalwand kann vorzugsweise mehrteilig ausgebildet sein, indem beispielsweise zur Ausbildung der Kanalwand ein Kanaldeckel mit der Primärmasse beziehungsweise mit der Sekundärmasse, insbesondere durch Schweißen, verbunden ist. Der Flansch kann insbesondere Teil der Sekundärmasse sein. Vorzugsweise ist der Flansch mehrteilig, um weitere Funktionen ausführen zu können. Insbesondere weist der Flansch einen Scheibendämpfer auf, vorzugsweise um Drehschwingungen in einem Frequenzbereich zu dämpfen, die von dem mit Hilfe des in dem Aufnahmekanal angeordneten Energiespeicherelements zu dämpfenden Frequenzbereich verschieden sind. Der Aufnahmekanal kann insbesondere nach radial innen weisende Anschläge aufweisen, über die das Drehmoment zwischen dem Energiespeicherelement und dem Aufnahmekanal übertragen werden kann. Die Anschläge sind insbesondere als spanslose Einprägung des Materials des Aufnahmekanals ausgebildet. Ferner kann das Energiespeicherelement innerhalb des Aufnahmekanals an dem Flansch anschlagen, um das Drehmoment zwischen dem Energiespeicherelement und dem Flansch zu übertragen. Die Sekundärmasse kann insbesondere über einen Mitnehmerring mit einem Kupplungsaggregat verbunden sein. Der Reibring weist insbesondere einen im Vergleich zu einer Materialpaarung Stahl/Stahl geringeren Reibungskoeffizient zwischen Kanalwand/Reibring und/oder Flansch/Reibring auf. Vorzugsweise sind ein erster Reibring und ein zweiter Reibring vorgesehen, zwischen denen in axialer Richtung der Flansch vorgesehen ist. Besonders bevorzugt sind der erste Reibring und der zweite Reibring zu einem Großteil, insbesondere vollständig, symmetrisch ausgestaltet.

Erfindungsgemäß weist zur Ausbildung der Dichteinrichtung der Reibring einen abstehenden Dichtfuß zur Ausbildung eines Dichtspalts in Form einer Labyrinthdichtung zwischen dem Reibring und dem Flansch und/oder zwischen dem Reibring und einem mit dem Flansch verbundenen Bauteil auf. Durch den Dichtfuß kann beabstandet zu der Kontaktstelle zwischen dem Reibring und der Kanalwand und/oder zwischen dem Reibring und dem Flansch eine weitere Dichtstelle geschaffen werden. Der Dichtspalt ist insbesondere nach radial innen zu der Kontaktstelle beabstandet. Die Länge des Dichtspalts und/oder die Höhe des Dichtspalts können zur Erreichung der gewünschten Dichtwirkung geeignet gewählt werden. Insbesondere ist der Dichtspalt durch eine Spielpassung ausgebildet, so dass aneinander abgleitende relativ bewegliche Bauteile vermieden sind und eine einfache Montage gegeben ist. Der Dichtfuß steht insbesondere nach radial innen von dem übrigen Reibring ab. Erfindungsgemäß weist der Dichtfuß einen in axialer Richtung abstehenden Dichtansatz auf. Durch den Dichtansatz kann die Länge des Dichtspalts vergrößert werden. Ferner kann das in axialer Richtung weisende Ende des Dichtansatzes einen in radialer Richtung verlaufenden Dichtspalt ausbilden.

Vorzugsweise erstreckt sich der Dichtspalt zu einem Großteil in axialer Richtung. Zwischen dem Reibring und der Kanalwand beziehungsweise zwischen dem Reibring und dem Flansch kann insbesondere eine sich in radialer Richtung erstreckende Kontaktfläche ausgebildet werden. Durch den axialen Verlauf des Dichtspalts wäre ein eingedrungenes Staubpartikel gezwungen zumindest eine Umlenkung um ca. 90° auszuführen, um auch an dem Reibring vorbei in den Aufnahmekanal zu gelangen. Diese Umlenkung erzwingt in der Art einer Labyrinthdichtung eine Verlangsamung der Bewegung, so dass die kinetische Energie soweit abgesenkt werden kann, dass ein Eindringen in dem Aufnahmekanal vermieden wird. Besonders bevorzugt ist der Dichtspalt zu einem Großteil, insbesondere vollständig, radial unterhalb des Aufnahmekanals vorgesehen. Die Dichteinrichtung kann dadurch in einem Bereich vorgesehen werden, der es nicht erforderlich macht den Bauraum zu vergrößern. Dies führt zu einen kompakten Aufbau des Zweimassenschwungrads.

In einer weiteren Ausführungsform ist vorgesehen, dass zur Ausbildung einer weiteren Dichteinrichtung eine an dem Flansch und dem Reibring anliegende Tellerfeder vorgesehen ist. Durch die Tellerfeder kann zwischen einem ersten Kraftrand der Tellerfeder und dem Reibring sowie zwischen einem zweiten Kraftrand der Tellerfeder und dem Flansch zusätzliche Dichtbarrieren vorgesehen werden, die ein Eindringen von Staub und Feuchtigkeit verhindern. Insbesondere kann zwischen der Kontaktstelle am ersten Kraftrand und der Kontaktstelle am zweiten Kraftrand ein Zwischenvolumen ausgebildet werden, in dem dennoch eingedrungene Verunreinigungen aufgenommen werden können, ohne dass diese Verunreinigungen an dem Reibring vorbei in den Aufnahmekanal gelangen.

Insbesondere liegt die Tellerfeder radial außen an dem Reibring und radial innen an dem Flansch an. Dadurch können die von der Tellerfeder bereit gestellten Dichtbarrieren möglichst weit beabstandet von der Kontaktstelle des Reibrings mit der Kanalwand und/oder mit dem Flansch positioniert werden, wodurch sich die Dichtwirkung erhöht.

In einer weiteren Ausführungsform ist vorgesehen, dass zur Ausbildung einer weiteren Dichteinrichtung ein mittelbar mit der Kanalwand verbundenes Abweiserblech zur Ausbildung eines Dichtspalts, insbesondere einer Labyrinthdichtung, zwischen dem Abweiserblech und einem nach radial innen weisenden Ende des Flansches und/oder zwischen dem Abweiserblech und einem mit dem Flansch gekoppelten Mitnehmerring vorgesehen ist. Das Abweiserblech kann insbesondere drehfest mittelbar oder unmittelbar mit der Antriebswelle des Kraftfahrzeugmotors verbindbar sein. Beispielsweise ist das Abweiserblech gemeinsam mit der Primärmasse über ein gemeinsames Verbindungsmittel mit der Antriebswelle, insbesondere Kurbelwelle, verbunden. Das Abweiserblech kann über seine von dem Flansch wegweisenden Seite Verunreinigungen, insbesondere Staub und Feuchtigkeit, bereits deutlich beabstandet von dem Aufnahmekanal abhalten und an seiner zum Flansch weisenden Seite den Dichtspalt ausbilden. Der Dichtspalt kann dadurch deutlich nach radial innen zu dem Reibring beabstandet positioniert sein. Die Länge des Dichtspalts und/oder die Höhe des Dichtspalts können zur Erreichung der gewünschten Dichtwirkung geeignet gewählt werden. Insbesondere ist der Dichtspalt durch eine Spielpassung ausgebildet, so dass aneinander abgleitende relativ bewegliche Bauteile vermieden sind und eine einfache Montage gegeben ist.

Insbesondere erstreckt sich der Dichtspalt zu einem Großteil in axialer Richtung. Zwischen dem Reibring und der Kanalwand beziehungsweise zwischen dem Reibring und dem Flansch kann insbesondere eine sich in radialer Richtung erstreckende Kontaktfläche ausgebildet werden. Durch den axialen Verlauf des Dichtspalts wäre ein eingedrungenes Staubpartikel gezwungen zumindest eine Umlenkung um ca. 90° auszuführen, um auch an dem Reibring vorbei in den Aufnahmekanal zu gelangen. Diese Umlenkung erzwingt in der Art einer Labyrinthdichtung eine Verlangsamung der Bewegung, so dass die kinetische Energie soweit abgesenkt werden kann, dass ein Eindringen in dem Aufnahmekanal vermieden wird. Vorzugsweise weist die Dichteinrichtung einen Radialwellendichtring auf. Durch den Radialwellendichtring kann eine berührende Dichtung ausgebildet werden, die bei vergleichsweise geringer Reibung eine besonders hohe Dichtwirkung bereit stellt. Der Radialwellendichtring kann insbesondere in dem jeweiligen Dichtspalt vorgesehen sein.

In einer weiteren Ausführungsform ist vorgesehen, dass zur Ausbildung einer weiteren Dichteinrichtung die Primärmasse und/oder die Sekundärmasse eine in eine Montageöffnung eingesetzte Staubdichtkappe zum Verschließen der Montageöffnung aufweist. Mit Hilfe der Montageöffnung kann insbesondere ein Werkzeug durch die Primärmasse beziehungsweise durch die Sekundärmasse hindurch ein Werkzeug, beispielsweise ein Schraubendrehen, durchgeführt werden. Mit Hilfe der Staubdichtkappe kann ein Eindringen von Verunreinigungen über die Montageöffnung vermieden werden. Die Staubdichtkappe ist insbesondere vollständig in dem die Montageöffnung ausbildenden Material versenkt, so dass kein zusätzlicher Bauraum erforderlich ist. Die Staubdichtkappe kann vorzugsweise aus einem im Vergleich zu Stahl nachgiebigen Material, beispielsweise Kunststoff, hergestellt sein, so dass die Staubdichtkappe mit Presspassung verliersicher durch Reibschluss in der Montageöffnung gehalten werden kann.

Die Erfindung betriff ferner einen Antriebsstrang für ein Kraftfahrzeug mit einem Zweimassenschwungrad, das wie vorstehend beschrieben aus- und weitergebildet sein kann, wobei das Zweimassenschwungrad, insbesondere über die Primärmasse, mit einer Antriebswelle eines Kraftfahrzeugmotors und, insbesondere über die Sekundärmasse, mit einem Kupplungsaggregat zum Kuppeln der Antriebswelle mit mindestens einer Getriebeeingangswelle eines Kraftfahrzeuggetriebes verbunden ist. Durch die Dichteinrichtung des Zweimassenschwungrads kann ein Eindringen von Staub und Feuchtigkeit in den Aufnahmekanal verhindert werden, so dass die Lebensdauer des Antriebsstrangs erhöht werden kann.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische Schnittansicht eines Antriebsstrangs mit einem Zweimassenschwungrad in einer ersten Ausführungsform,
- Fig. 2:: eine schematische Detailansicht des Zweimassenschwungrads aus Fig. 1,
- Fig. 3:: eine schematische Schnittansicht eines Antriebsstrangs mit einem Zweimassenschwungrad in einer zweiten Ausführungsform und
- Fig. 4:: eine schematische Schnittansicht eines Antriebsstrangs mit einem Zweimassenschwungrad in einer dritten Ausführungsform.

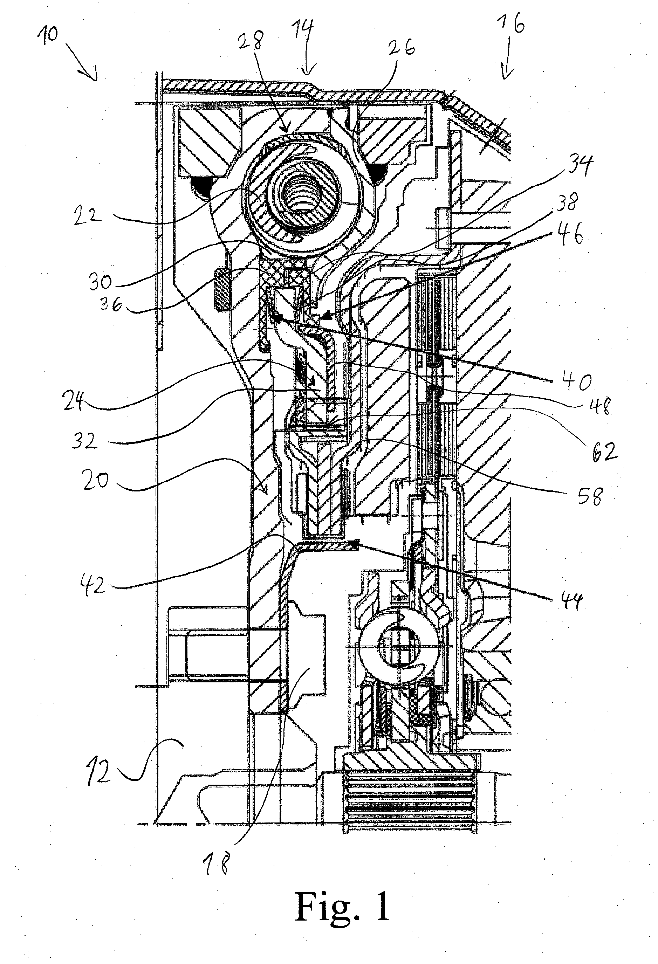

Der in Fig. 1 dargestellte Antriebsstrang 10 weist eine Antriebswelle 12 eines Kraftfahrzeugmotors auf, die über ein Zweimassenschwungrad 14 mit einem Kupplungsaggregat 16 zum Kuppeln der Antriebswelle 12 mit mindestens einer Getriebeeingangswelle eine Kraftfahrzeuggetriebes verbunden ist. Das Zweimassenschwungrad 14 weist eine mit einer Schraube 18 mit der Antriebswelle 12 verschraubte Primärmasse 20 auf, die über ein als Bogenfeder 22 ausgestaltetes Energiespeicherelement mit einer relativ zur Primärmasse 20 begrenzt verdrehbaren Sekundärmasse 24 verbunden ist. Die Primärmasse 20 weist einen angeschweißten Kanaldeckel 26 auf, der gemeinsam mit der übrigen Primärmasse 20 eine Kanalwand 28 für einen als Ringfederkanal ausgestalteten Aufnahmekanal 30 zur Aufnahme der Bogenfeder 22 ausbildet. In den Aufnahmekanal 30 ragt ein Flansch 32 der Sekundärmasse 24 hinein, um das über die Kanalwand 28 an die Bogenfeder 22 übertragene und zwischengespeicherte Drehmoment an die Sekundärmasse 24 ausleiten zu können.

Im dargestellten Ausführungsbeispiel ist zwischen dem Flansch 32 und dem Kanaldeckel 26 ein erster Reibring 34 und an der gegenüberliegenden Seite des Flansch 32 ein zweiter Reibring 36 vorgesehen. Zwischen dem ersten Reibring 34 und dem Flansch 32 ist eine erste Tellerfeder 38 vorgesehen, die eine Dichteinrichtung zur Abdichtung des Aufnahmekanals 30 ausbildet. Entsprechend ist zwischen dem zweiten Reibring 36 und dem Flansch 32 eine zweite Tellerfeder 40 vorgesehen, die ebenfalls eine Dichteinrichtung zur Abdichtung des Aufnahmekanals 30 ausbildet. Ferner ist über das Befestigungsmittel 18 mit der Primärmasse 20 und mit der Antriebswelle 12 ein Abweiserblech 42 befestigt, das zwischen dem nach radial innen weisenden Ende des Flansch 32 und/oder einem mit dem Flansch 32 verbundener Mitnehmerring 58 einen Dichtspalt 44 ausbildet, um ebenfalls eine Dichteinrichtung zur Abdichtung des Aufnahmekanals 30 auszubilden. Ferner ist es möglich, dass der Flansch 32 einen Scheibendämpfer 60 aufweist. Der Scheibendämpfer 60 und/oder der Mitnehmerring 58 kann beispielsweise über eine Steckverzahnung 62 angebunden sein.

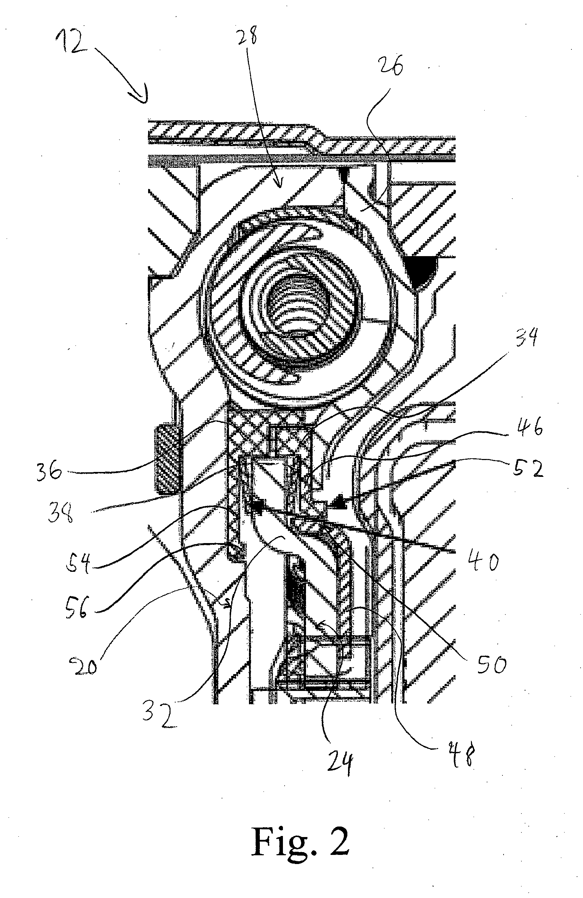

Wie insbesondere in Fig. 2 exemplarisch am ersten Reibring 34 dargestellt weist der erste Reibring 34 einen nach radial innen abstehenden ersten Dichtfuß 46 auf. Zwischen dem ersten Dichtfuß 46 und dem Flansch 32 beziehungsweise wie im dargestellten Ausführungsbeispiel gezeigt zwischen dem ersten Dichtfuß 46 und einem mit dem Flansch 32 befestigten Bauteil 48 ist ein Dichtspalt 50 vorgesehen, um ebenfalls eine Dichteinrichtung zur Abdichtung des Aufnahmekanals 30 auszubilden. Der erste Dichtfuß 46 weist einen in axialer Richtung abstehenden ersten Dichtansatz 52 auf, wodurch im dargestellten Ausführungsbeispiel die axialer Erstreckung es Dichtspalts 50 vergrößert werden kann. Zusätzlich oder alternativ kann der zweite Reibring 36 einen nach radial innen abstehenden zweiten Dichtfuß 54 aufweisen, von dem ebenfalls ein zweiter Dichtansatz 56 abstehen kann.

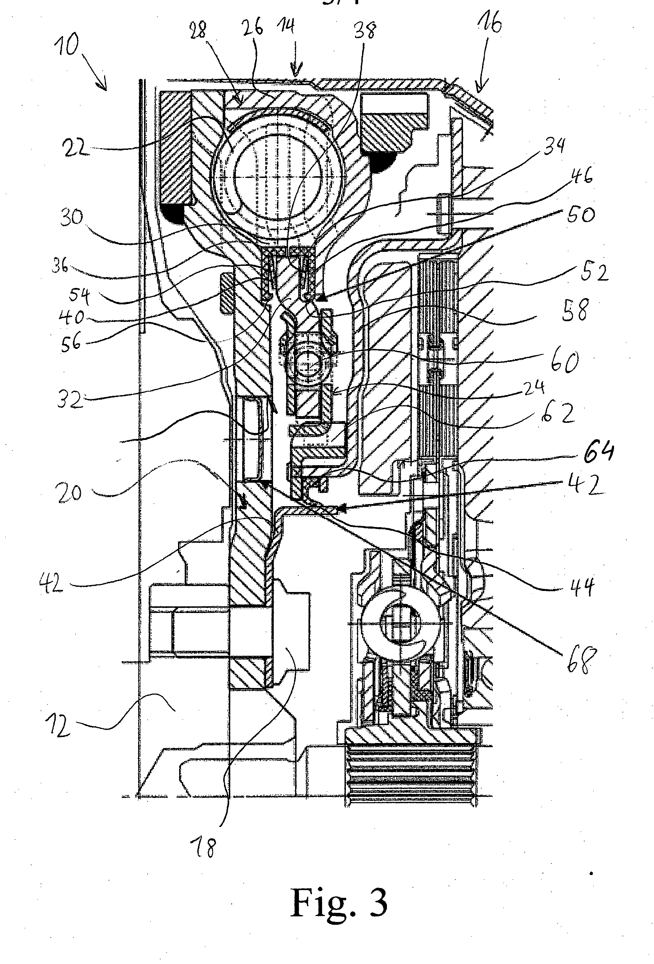

Bei dem in Fig. 3 dargestellten Ausführungsbeispiel des Antriebsstrangs 10 ist im Vergleich zu dem in Fig. 1 und Fig. 2 dargestellten Ausführungsbeispiel des Antriebsstrangs 10 zwischen dem Mitnehmerring 58 und dem Abweiserblech 42 ein Radialwellendichtring 64 vorgesehen, durch den sich der Dichtspalt 44 im Wesentlichen zu Null nivelliert. Ferner weist die Primärmasse eine Montageöffnung 66 auf, über die beispielsweise eine Zugänglichkeit zur Steckverzahnung 62 geschaffen werden kann. Die Montageöffnung 66 ist mit einer in die Montageöffnung 66 eingepressten Staubdichtkappe 68 verschlossen.

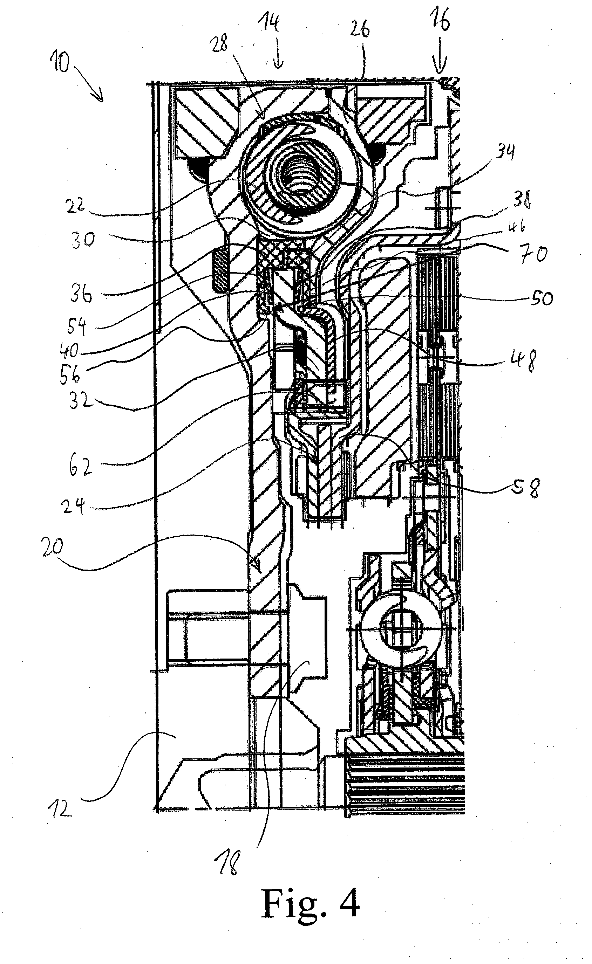

Bei dem in Fig. 4 dargestellten Ausführungsbeispiel des Antriebsstrangs 10 ist im Vergleich zu dem in Fig. 1 und Fig. 2 dargestellten Ausführungsbeispiel des Antriebsstrangs 10 zwischen der in axialer Richtung weisenden Stirnseite des zweiten Dichtansatz 56 ein weiterer Dichtspalt 70 zwischen dem zweiten Reibungsring 36 und dem Flansch 32 ausgebildet, durch den ebenfalls eine Dichteinrichtung zur Abdichtung des Aufnahmekanals 30 ausbildet ist.

Die vorstehend beschriebenen Dichteinrichtungen und Dichtmaßnahmen können insbesondere allesamt oder teilweise bei einem Zweimassenschwungrad 14 vorgesehen sein, um eine gewünschte Dichtwirkung für den Aufnahmekanal 30 bereitzustellen.

### Bezugszeichenliste

- 10: Antriebsstrang
- 12: Antriebswelle
- 14: Zweimassenschwungrad
- 16: Kupplungsaggregat
- 18: Schraube
- 20: Primärmasse
- 22: Bogenfeder
- 24: Sekundärmasse
- 26: Kanaldeckel
- 28: Kanalwand
- 30: Aufnahmekanal
- 32: Flansch
- 34: erster Reibring
- 36: zweiter Reibring
- 38: erste Tellerfeder
- 40: zweite Tellerfeder
- 42: Abweiserblech
- 44: Dichtspalt
- 46: erster Dichtfuß
- 48: Bauteil
- 50: Dichtspalt
- 52: erster Dichtansatz
- 54: zweiter Dichtfuß
- 56: zweiter Dichtansatz
- 58: Mitnehmerring
- 60: Scheibendämpfer
- 62: Steckverzahnung
- 64: Radialwellendichtring
- 66: Montageöffnung
- 68: Staubdichtkappe
- 70: weiterer Dichtspalt

## Patentansprüche

1. Zweimassenschwungrad zur Drehschwingungsdämpfung zwischen einer Antriebswelle (12) eines Kraftfahrzeugmotors und einer Getriebeeingangswelle eines Kraftfahrzeuggetriebes, mit
einer Primärmasse (20) zum Einleiten eines Drehmoments,
einer relativ zur Primärmasse (20) verdrehbaren Sekundärmasse (24) zum Ausleiten eines Drehmoments,
einem mit der Primärmasse (20) und der Sekundärmasse (24) koppelbaren Energiespeicherelement, insbesondere Bogenfeder (22),
wobei durch die Primärmasse (20) und/oder die Sekundärmasse (24) ein Aufnahmekanal (30) ausgebildet ist, wobei der Aufnahmekanal (30) eine Kanalwand (28) und einen in den Aufnahmekanal (28) hineinragenden Flansch (32) aufweist, wobei der Flansch (32) über einen Reibring (34, 36) relativ verdrehbar an der Kanalwand (28) abgestützt ist,
wobei
eine Dichteinrichtung zur Abdichtung des Aufnahmekanals (30) vorgesehen ist, **dadurch gekennzeichnet, dass** zur Ausbildung der Dichteinrichtung der Reibring (34) einen abstehenden Dichtfuß (46) zur Ausbildung eines Dichtspalts (50) in Form einer Labyrinthdichtung zwischen dem Reibring (34) und dem Flansch (32) und/oder zwischen dem Reibring (34) und einem mit dem Flansch (32) verbundenen Bauteil (48) aufweist, wobei der Dichtfuß (46) einen axial abstehenden Dichtansatz (52) aufweist.

2. Zweimassenschwungrad nach Anspruch 1, **dadurch gekennzeichnet, dass** sich der Dichtspalt (50) zu einem Großteil in axialer Richtung erstreckt.

3. Zweimassenschwungrad nach Anspruch 1 oder 2, **dadurch gekennzeichnet, dass** der Dichtspalt (50) zu einem Großteil, insbesondere vollständig, radial unterhalb des Aufnahmekanals (30) vorgesehen ist.

4. Zweimassenschwungrad nach einem der Ansprüche 1 bis 3, **dadurch gekennzeichnet, dass** zur Ausbildung einer weiteren Dichteinrichtung eine an dem Flansch (32) und dem Reibring (34, 36) anliegende Tellerfeder (38, 40) vorgesehen ist.

5. Zweimassenschwungrad nach Anspruch 4, **dadurch gekennzeichnet, dass** die Tellerfeder (38, 40) radial außen an dem Reibring (34, 36) und radial innen an dem Flansch (32) anliegt.

6. Zweimassenschwungrad nach einem der Ansprüche 1 bis 5, **dadurch gekennzeichnet, dass** zur Ausbildung einer weiteren Dichteinrichtung ein mittelbar mit der Kanalwand (28) verbundenes Abweiserblech (42) zur Ausbildung eines Dichtspalts (44), insbesondere einer Labyrinthdichtung, zwischen dem Abweiserblech (42) und einem nach radial innen weisenden Ende des Flansches (32) und/oder zwischen dem Abweiserblech (42) und einem mit dem Flansch (32) gekoppelten Mitnehmerring (58) vorgesehen ist.

7. Zweimassenschwungrad nach Anspruch 6, **dadurch gekennzeichnet, dass** sich der Dichtspalt (44) zu einem Großteil in axialer Richtung erstreckt.

8. Zweimassenschwungrad nach einem der Ansprüche 6 oder 7, **dadurch gekennzeichnet, dass** die Dichteinrichtung am Abweiserblech (42) einen Radialwellendichtring (64) aufweist.

9. Zweimassenschwungrad nach einem der Ansprüche 1 bis 8, **dadurch gekennzeichnet, dass** zur Ausbildung einer weiteren Dichteinrichtung die Primärmasse (20) und/oder die Sekundärmasse (24) eine in eine Montageöffnung (66) eingesetzte Staubdichtkappe (68) zum Verschließen der Montageöffnung (66) aufweist.

## Claims

1. A dual mass flywheel for torsional vibration damping between a drive shaft (12) of a motor vehicle engine and a transmission input shaft of a motor vehicle transmission, having
a primary mass (20) for introducing a torque,
a secondary mass (24), which can be rotated relative to the primary mass (20), in order to discharge a torque,
an energy storage element, in particular a bow spring (22), which can be coupled to the primary mass (20) and the secondary mass (24),
wherein a receiving channel (30) is formed by the primary mass (20) and / or the secondary mass (24), the receiving channel (30) having a channel wall (28) and a flange (32) projecting into the receiving channel (28), wherein the flange (32) is supported on the channel wall (28) in a relatively rotatable manner by means of a friction ring (34, 36),
wherein
a sealing device for sealing off the receiving channel (30) is provided, **characterised in that**, for forming the sealing device, the friction ring (34) has a protruding sealing foot (46) for forming a sealing gap (50) in the form of a labyrinth seal between the friction ring (34) and the flange (32) and/or between the friction ring (34) and a component (48) connected to the flange (32), the sealing foot (46) having an axially projecting sealing attachment (52).

2. The dual-mass flywheel according to claim 1, **characterised in that** the sealing gap (50) extends to a large extent in the axial direction.

3. The dual-mass flywheel according to claim 1 or 2, **characterised in that**, to a large extent, in particular completely, the sealing gap (50) is provided radially below the receiving channel (30).

4. The dual-mass flywheel according to any one of claims 1 to 3, **characterised in that** a plate spring (38, 40), bearing against the flange (32) and the friction ring (34, 36), is provided to form a further sealing device.

5. The dual-mass flywheel according to claim 4, **characterised in that** the plate spring (38, 40) bears radially against the outside of the friction ring (34, 36) and radially against the inside of the flange (32).

6. The dual-mass flywheel according to any one of claims 1 to 5, **characterised in that**, to form a further sealing device, a deflector plate (42) indirectly connected to the channel wall (28) to form a sealing gap (44), in particular a labyrinth seal, is provided between the deflector plate (42) and a radially inward facing end of the flange (32) and/or between the deflector plate (42) and a driving ring (58) coupled to the flange (32).

7. The dual-mass flywheel according to claim 6, **characterised in that** the sealing gap (44) extends to a large extent in the axial direction.

8. The dual-mass flywheel according to any one of claims 6 or 7, **characterised in that** the sealing device on the deflector plate (42) has a radial shaft sealing ring (64).

9. The dual-mass flywheel according to any one of claims 1 to 8, **characterised in that**, to form a further sealing device, the primary mass (20) and/or the secondary mass (24) have a dust sealing cap (68) inserted into an assembly opening (66) for closing the assembly opening (66).

## Revendications

1. Volant d'inertie à deux masses pour l'amortissement des vibrations de torsion entre un arbre d'entraînement (12) d'un moteur de véhicule automobile et un arbre d'entrée de transmission d'une transmission de véhicule automobile, comprenant une masse primaire (20) pour introduire un couple,
une masse secondaire (24) pouvant tourner par rapport à la masse primaire (20), afin de sortir un couple,
un élément de stockage d'énergie pouvant être couplé à la masse primaire (20) et à la masse secondaire (24), notamment un ressort en arc (22),
un canal de réception (30) étant formé à travers la masse primaire (20) et/ou la masse secondaire (24), le canal de réception (30) présentant une paroi de canal (28) et une bride (32) faisant saillie dans le canal de réception (28), la bride (32) étant supportée sur la paroi de canal (28) de manière relativement rotative via une bague de friction (34, 36),
un dispositif d'étanchéité pour sceller le canal de réception (30) étant prévu, **caractérisé en ce que**, pour former le dispositif d'étanchéité, la bague de friction (34) présente un pied d'étanchéité saillant (46) pour former un espace d'étanchéité (50) sous la forme d'un joint labyrinthe entre la bague de friction (34) et la bride (32) et/ou entre la bague de friction (34) et un composant (48) relié à la bride (32), le pied d'étanchéité (46) présentant une saillie d'étanchéité (52) axialement saillante.

2. Volant d'inertie à deux masses selon la revendication 1, **caractérisé en ce que** l'espace d'étanchéité (50) s'étend largement dans la direction axiale.

3. Volant d'inertie à deux masses selon la revendication 1 ou 2, **caractérisé en ce que** l'espace d'étanchéité (50) est largement, notamment complètement, prévu radialement en dessous du canal de réception (30).

4. Volant d'inertie à deux masses selon l'une quelconque des revendications 1 à 3, **caractérisé en ce qu'**un ressort à lames (38, 40) venant en appui contre la bride (32) et la bague de friction (34, 36) est prévu pour former un autre dispositif d'étanchéité.

5. Volant d'inertie à deux masses selon la revendication 4, **caractérisé en ce que** le ressort à lames (38, 40) vient en appui radialement à l'extérieur contre la bague de friction (34, 36) et radialement à l'intérieur contre la bride (32).

6. Volant d'inertie à deux masses selon l'une quelconque des revendications 1 à 5, **caractérisé en ce que** pour former un autre dispositif d'étanchéité, une plaque déflectrice (42) reliée indirectement à la paroi du canal (28) est prévue pour former un espace d'étanchéité (44), notamment un joint labyrinthe, entre la plaque déflectrice (42) et une extrémité radialement intérieure de la bride (32) et/ou entre la plaque déflectrice (42) et une bague d'entraînement (58) couplée à la bride (32).

7. Volant d'inertie à deux masses selon la revendication 6, **caractérisé en ce que** l'espace d'étanchéité (44) s'étend largement dans la direction axiale.

8. Volant d'inertie à deux masses selon l'une quelconque des revendications 6 ou 7, **caractérisé en ce que** le dispositif d'étanchéité présente, sur la plaque déflectrice (42), une bague à lèvre (64).

9. Volant d'inertie à deux masses selon l'une quelconque des revendications 1 à 8, **caractérisé en ce que** pour former un autre dispositif d'étanchéité, la masse primaire (20) et/ou la masse secondaire (24) présentent un capuchon anti-poussière (68) inséré dans une ouverture d'assemblage (66) pour fermer l'ouverture d'assemblage (66).
